(19) Europäisches Patentamt
European Patent Office
Office européen des brevets

(11) EP 3 824 325 B1

(12) **EUROPEAN PATENT SPECIFICATION**

(45) Date of publication and mention of the grant of the patent:
**08.01.2025 Bulletin 2025/02**

(21) Application number: **19772841.3**

(22) Date of filing: **10.07.2019**

(51) International Patent Classification (IPC):
***G02B 1/18*** *(2015.01)* ***B60S 1/02*** *(2006.01)*
*B60S 1/56* *(2006.01)*

(52) Cooperative Patent Classification (CPC):
**G02B 1/18; B60S 1/02;** B60S 1/56

(86) International application number:
**PCT/IB2019/055891**

(87) International publication number:
**WO 2020/016708 (23.01.2020 Gazette 2020/04)**

(54) **VEHICLE SENSORS COMPRISING REPELLENT SURFACE, PROTECTIVE FILMS, REPELLENT COATING COMPOSITIONS, AND METHODS**

FAHRZEUGSENSOREN MIT ABWEISENDER OBERFLÄCHE, SCHUTZFILMEN, ABWEISENDEN BESCHICHTUNGSZUSAMMENSETZUNGEN UND VERFAHREN

CAPTEURS DE VÉHICULE COMPRENANT UNE SURFACE RÉPULSIVE, FILMS PROTECTEURS, COMPOSITIONS DE REVÊTEMENT RÉPULSIF, ET PROCÉDÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2018 US 201862699927 P**

(43) Date of publication of application:
**26.05.2021 Bulletin 2021/21**

(73) Proprietor: **3M Innovative Properties Company**
**Saint Paul, Minnesota 55133-3427 (US)**

(72) Inventors:
- **AMB, Chad M.**
  **Saint Paul, Minnesota 55133-3427 (US)**
- **POKORNY, Richard J.**
  **Saint Paul, Minnesota 55133-3427 (US)**
- **KLUN, Thomas P.**
  **Saint Paul, Minnesota 55133-3427 (US)**
- **UNTIEDT, Nicholas L.**
  **Saint Paul, Minnesota 55133-3427 (US)**
- **DAVID, Moses M.**
  **Saint Paul, Minnesota 55133-3427 (US)**
- **NIETFELD, Jon P.**
  **Saint Paul, Minnesota 55133-3427 (US)**
- **NOYOLA, Joan M.**
  **Saint Paul, Minnesota 55133-3427 (US)**
- **SHAVER, Jonah**
  **Saint Paul, Minnesota 55133-3427 (US)**
- **GILLETTE, Kristy A.**
  **Saint Paul, Minnesota 55133-3427 (US)**
- **SAVU, Patricia M.**
  **Saint Paul, Minnesota 55133-3427 (US)**

(74) Representative: **Mathys & Squire**
**Theatinerstraße 7**
**80333 München (DE)**

(56) References cited:
**KR-A- 20160 057 607**
**US-A- 4 818 801**
**US-A- 5 846 650**
**US-A1- 2016 306 198**
**US-A1- 2016 340 457**
**US-A1- 2017 101 540**
**US-B2- 8 742 022**

- **3M CANADA COMPANY: "Material Safety Data Sheet FC-171 FLUORAD BRAND FLUOROCHEMICAL SURFACTANT", 5 August 2002 (2002-08-05), XP055643633, Retrieved from the Internet <URL:http://multimedia.3m.com/mws/mediawebserver?mwsId=SSSSSuUn_zu8lZNU4xtx5x_S5v70kDVFNvu9lxtD7SSSSSS--> [retrieved on 20191118]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Summary of the Invention

A vehicle sensor system is described comprising an exterior surface; and a repellent composition disposed on the exterior surface, wherein the repellent composition exhibits an increase in haze according to the Dirty Water Spray Test of less than 5, 4, 3, or 2%. In typical embodiments, the repellent composition exhibits an advancing water contact angle from 90° to 125°. In some embodiments, the sensor system comprises a camera, a laser, a LIDAR sensor, a sonar sensor, or a radar sensor. The exterior surface is typically a windshield surface, a protective housing, or a lens surface. In some favored embodiments, the repellent composition exhibits a roll-off angle of no greater than 25, 20, 15, 10 or 5 degrees.

### Detailed Description and Preferred Embodiments

The use of sensor technology in vehicles (e.g. automobiles) has increased. For example, autonomous and semi-autonomous vehicles have the potential to be used in an increasing number of applications. Such autonomous vehicles include at least one vehicle sensor system, a system configured to receive information regarding, for example, the surrounding terrain, upcoming obstacles, a path, etc. In some instances, the vehicle sensor system is configured to automatically respond to this information in place of a human operator by commanding a series of maneuvers so that the vehicle is able to negotiate the terrain, avoid the obstacles, or track a particular path with little or no human intervention. Examples of various types of sensors used to detect objects in the surroundings may include lasers or LIDAR (light detection and ranging), sonar, radar, cameras, and other devices which have the ability to scan and record data from the vehicle's surroundings. Such scans will necessarily be initiated or received through an exterior facing element. The exterior facing element may be part of the scanning sensor itself or may be an additional part of the vehicle sensor system that shields or protects more fragile parts. Example of such exterior facing elements include a windshield (if a sensor is placed behind the windshield), a headlight (if sensor is placed behind the headlight), a protective housing and the surface of a camera lens.

The exterior facing element has a surface (the exterior surface) that is exposed to elements of the outdoor environment, for example temperature, water, other weather, dirt and debris. Any of these elements can interfere with the exterior facing element and can compromise the scan going out or the data coming in to the vehicle sensor system. KR20160057607A is an example of a vehicle sensor system of the prior art.

A vehicle sensor is described comprising an exterior surface that is repellent to elements of the outdoor environment. In one embodiment, the repellent surface is provided by a repellent composition applied to the exterior surface of the vehicle sensor. In another embodiment, the repellent surface is provided by a protective film wherein the protective film comprises the repellent composition.

Repellency of a surface and composition can be characterized according to various methods.

In some embodiments, the repellency can be characterized by advancing water contact angles. The advancing water contact angle is measured by using a Ramé-Hart goniometer (Ramé-Hart Instrument Co., Succasunna, New Jersey). Advancing ($\theta_{adv}$) and receding ($\theta_{rec}$) angles can be measured with fluid supplied *via* a syringe into or out of sessile droplets (drop volume about 5 μL). The probe fluid used in this test is deionized water. Contact Angle hysteresis ($\theta_{hys}$) can be determined using the following equation: $\theta_{hys} = \theta_{adv} - \theta_{rec}$.

In some embodiments, it is difficult to measure a receeding contact angle due to the dynamic nature of the contact angle (i.e. the contact angle changes over time). This can be caused, among other things, by the surface tension of the water droplet changing over time due to the droplet admixing with (e.g. surfactant) components of the repellent surface layer. In these cases, an initial (1s) advancing angle can be measured. Here, the drop is dispensed with the syringe needle close enough to the surface as to advance the drop on the surface upon dispensing. The contact angle is measured after 1s. The contact angle can be measured after longer periods of time, where the angle decreases over time.

The repellent surface typically has an advancing contact angle with deionized water of at least 90 degrees. In some embodiments, the repellent surface has an advancing contact angle with deionized water of at least 91, 92, 93, 94, 95, 96, 97, 98, 99, or 100 degrees. The advancing contact angle with deionized water of the repellent surface is typically no greater than 125 degrees. In some embodiments, the advancing contact angle with deionized water of the repellent surface is no greater than 124, 123, 122, 21, or 120 degrees

In some embodiments, the repellency can be characterized according to the Roll-off Angle Test, as further described in the example. This is the minimum angle in which a drop of deionized water begins to roll off the repellent surface. In typical embodiments, the roll-off angle is less than 25, 24, 23, 22, 21, 20, 19, 18, 17, 16, 15 degrees. In some embodiments, the roll-off angle is at least 5 degrees. In other embodiments, the roll-off angle is at least 6, 7, 8, 9, or 10 degrees.

The advancing contact angle and roll-off angle with deionized water is not necessarily predictive of the performance of the coating compositions with "dirty" water. Thus, in order to model this problem, the Dirty Water Spray

Test was developed as described in greater detail in the examples. This test is suitable for evaluating the repellency of a surface for outdoor use. The test method generally comprises providing a transparent film comprising a repellent surface. In some embodiments, a coating composition is provided on a major surface of a transparent (e.g. support) film. The test method further comprises measuring the initial haze of the transparent film including the repellent surface (e.g. layer of cured coating). The haze can be measured by any suitable method. In some embodiments, haze measurements can be determined by using a BYK Haze-Gard Plus (BYK Gardner USA, Columbia, Maryland). Measurements are taken at six different spots on each film sample and averaged. The test method further comprising preparing an aqueous solution comprising salt and inorganic material. In some embodiments, salt (e.g. sodium chloride) and insoluble inorganic particulate material (e.g. clay) are independently present at an amount ranging from 0.25 to 1, 2, 3, 4, or 5 wt-% solids. For example, for evaluating repellency of seawater, the 3.5 wt-% sodium chloride solution may be used. However, vehicles, including vehicle sensors can be exposed to even higher salt concentrations. The method further comprises applying the aqueous solution to the repellent surface of the transparent film. Any suitable device may be used for applying the aqueous solution. For example, the entire film may be submerged in the aqueous solution or the aqueous solution may be applied by spraying. In one embodiment, the aqueous solution is applied by hand with a spray bottle. Depressing the trigger of the spray bottle 8 times delivers 4.2 grams of dirty water on a surface area of 250 $cm^2$. The droplets of dirty water have a random distribution of sizes, the diameter of the drops ranging from about 0.5 mm to 3 mm. The method further comprising orientating the transparent film including the repellent surface vertically before or after applying the aqueous solution. The next step entails allowing the remaining aqueous solution on the repellent surface to dry and remeasuring the haze. The lower the increase in haze relative to the initial haze, the better the repellency.

The repellent surface and composition described herein can exhibit an increase in haze of less than 5%. In some embodiments, the increase in haze is less than 4.5, 4, 3.5, 3, 2.5, 2, or 1.5%.

The repellent surface comprises a cured organic matrix comprising low surface energy moieties. The cured organic matrix is the reaction product of an ethylenically unsaturated (e.g. free-radically polymerizable) material comprising a low surface energy moiety. Materials of this type have also been described as "additives" in US 8,742,022; WO 2013/191822; and WO 2013/191861. As described in such patents, such additives have been utilized at relatively small concentrations. In the present invention, however, the concentration of such ethylenically unsaturated material comprising a low surface energy moiety is typically significantly greater; thereby contributing to the desired repellency properties. In typical embodiments, the cured organic matrix comprises greater than 10 wt-% of reactions products of ethylenically unsaturated materials comprising a low surface energy moiety. In some embodiments, the cured organic matrix comprises at least 11, 12, 13, 14, 15, 16, 17, 18, 19 or 20 wt-% of reaction products of ethylenically unsaturated material(s) comprising a low surface energy moiety. In other embodiments, the cured organic matrix comprises at least 20, 25, 30, or 35 wt-% of reaction products of ethylenically unsaturated material(s) comprising a low surface energy moiety. In some embodiments, the cured organic matrix comprises 90, 95 or 100 wt-% of reaction products of ethylenically unsaturated material(s) comprising a low surface energy moiety. In other embodiments, the cured organic matrix comprises no greater than 85, 80, 75, 70, 65, 60 wt-% of reaction products of ethylenically unsaturated material(s) comprising a low surface energy moiety.

The low surface energy moiety is a fluorinated moiety. The fluorinated moiety is typically a partially or fully fluorinated alkyl group or a partially or fully fluorinated polyether group.

The concentration of (per)fluoroalkyl and/or (per)fluoroether moieties is typically at least 2.5, 2.6, 2.7, 2.8, 2.9, 3.0, 3.1, 3.2, 3.3, 3.4, 3.5, 3.6, 3.8 or 3.9 wt-% of the total solids of the repellent composition (i.e. all the components except the organic solvent). In some embodiments, the concentration of (per)fluoroalkyl and/or (per)fluoroether moieties is at least 4, 4.5, 5.0, 5.5, or 6 wt-%. In other embodiments, the concentration of (per)fluoroalkyl and/or (per)fluoroether moieties is at least 6.5, 7.0, 7.5, or 8 wt-%. In typical embodiments, the concentration of (per)fluoroalkyl and/or (per)fluoroether moieties is no greater than 15, 14.5, 14, 13.5, 13.0, or 12.5 wt-% of the total solids of the repellent composition. In some embodiments, the concentration of (per)fluoroalkyl and/or (per)fluoroether moieties is no greater than 12, 11.5, 11, 10.5, 10, 9.5, 9, 8.5, 8, 7.5 or 7 wt-%.

In a favored embodiment, the low surface energy moiety is a perfluoropolyether group. The perfluoropolyether group $R_f$ can be linear, branched, cyclic, or combinations thereof and can be saturated or unsaturated. The perfluoropolyether has at least two catenated oxygen heteroatoms. Exemplary perfluoropolyethers include, but are not limited to, those that have perfluorinated repeating units selected from the group of $-(C_pF_{2p})-$, $-(C_pF_{2p}O)-$, -(CF(Z))-, - (CF(Z)O)-, $-(CF(Z)C_pF_{2p}O)-$, $-(C_pF_{2p}CF(Z)O)-$, $-(CF_2CF(Z)O)-$, or combinations thereof. In these repeating units, p is typically an integer of 1 to 10. In some embodiments, p is an integer of 1 to 8, 1 to 6, 1 to 4, or 1 to 3. The group Z is a perfluoroalkyl group, perfluoroether group, perfluoropolyether, or a perfluoroalkoxy group, all of which can be linear, branched, or cyclic. The Z group typically has no more than 12 carbon atoms, no more than 10 carbon atoms, or no more than 9 carbon atoms, no more than 4 carbon atoms, no more than 3 carbon atoms, no more than 2 carbon atoms, or no more than 1 carbon atom. In some embodiments, the Z group can have no more than 4, no more than 3, no more than 2, no more than 1, or no oxygen atoms. In these perfluoropolyether structures, the different repeat units can be distributed randomly along the chain.

Rf is typically monovalent. In some compounds, the terminal groups can be $(C_pF_{2p+1})-$, $(C_pF_{2p+1}O)-$,

$(X'C_pF_{2p}O)$-, or $(X'C_pF_{2p+1})$- where X' is hydrogen, chlorine, or bromine and p is an integer of 1 to 10. In some embodiments of monovalent Rf groups, the terminal group is perfluorinated and p is an integer of 1 to 10, 1 to 8, 1 to 6, 1 to 4, or 1 to 3. Exemplary monovalent Rf groups include $CF_3O(C_2F_4O)_nCF_2$-, $C_3F_7O(CF_2CF_2CF_2O)_nCF_2CF_2$-, and $C_3F_7O(CF(CF_3)CF_2O)_nCF(CF_3)$- wherein n has an average value of 0 to 50, 1 to 50, 3 to 30, 3 to 15, or 3 to 10.

In some embodiments, the low surface energy material comprises a polyurethane backbone. Such low surface energy materials are generally prepared by reacting at least one polyisocyanate with isocyanate reactive compounds having a low surface energy moiety and additional (e.g. multi-acrylate) isocyanate reactive compounds having other groups, as desired.

In some embodiment, the low surface energy material may be represented by the general formula:

$$Ri\text{-}(NHC(O)XQR^L), \text{-}(NHC(O)OQ(A)p),$$

wherein Ri is a residue of a multi-isocyanate;
$R^L$ is a low surface energy moiety;
X are each independently O, S or NR', where R' is H or lower alkyl of 1 to 4 carbon atoms;
Q is independently a connecting group of valency at least 2;
A is a (meth)acryl functional group such as -XC(O)C(R2)=CH2, where R2 is a lower alkyl of 1 to 4 carbon atoms or H or F; and
p is 2 to 6.

Q can comprise a bond or a straight chain, branched chain, or cyclic-containing connecting group. Q can include an alkylene, an arylene, an aralkylene, an alkarylene. Q can optionally include heteroatoms such as O, N, and S, and combinations thereof. Q can also optionally include a heteroatom-containing functional group such as carbonyl or sulfonyl, and combinations thereof.

In some embodiments, $R^L$ is a monovalent perfluoropolyether moiety of the formula $(F(CF(CF_3)CF_2O)_aCF(CF_3)$-, wherein "a" averages 2 to 15. In some embodiments, "a" averages between 3 and 10 or a averages between 5 and 8.

One representative structure of perfluoropolyether urethanes with multi-acrylate terminal groups is shown below as:

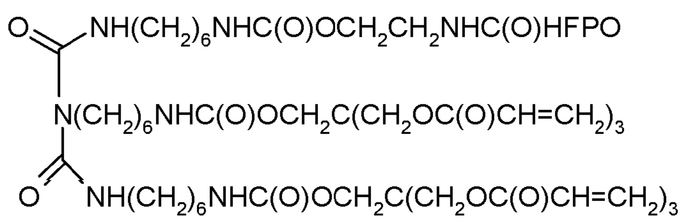

This structure is the reaction product of the biuret of HDI with one equivalent of HFPO oligomer amidol $(F(CF(CF_3)CF_2O)_aCF(CF_3)C(O)NHCH_2CH_2OH)$ and two equivalents of pentaerythritol triacrylate.

Other suitable perfluoropolyether urethanes are described in US7718264.

Other suitable perfluoropolyether (meth)acrylate compounds include for example

HFPO-C(O) $NHCH_2CH_2OC(O)CH=CH_2$,
HFPO-C(O)$NHCH_2CH_2OCH_2CH_2OCH_2CH_2OC(O)CH=CH_2$,
HFPO-C(O)NH-$(CH_2)_6OC(O)CH=CH_2$ and various other perfluoropolyether compounds such as described in U.S. Patent No. 7,342,080 and U.S. Publication No. US2005249940.

Monofunctional low surface energy material are typically employed in combination with multifunctional materials.

In other embodiments, the low surface energy material comprises a perfluoroalkyl group. The term "perfluoroalkyl group" includes alkyl groups in which all C-H bonds are replaced by C-F bonds as well as groups in which one hydrogen is present replacing a terminal fluorine atom. In some embodiments of perfluoroalkyl groups, when at least one hydrogen is present, the perfluoroalkyl group includes at least one difluoromethyl group. Suitable perfluoroalkyl groups comprise 3 to 12 (i.e., 3, 4, 5, 6, 7, 8, 9, 10, 11, or 12) carbon atoms.

In some embodiments, the low surface energy material may comprise a unit represented by the formula:

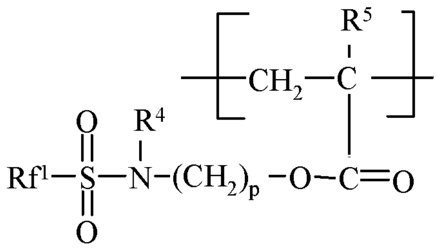

wherein $Rf^1$ is independently a perfluoroalkyl group, having from 3 to 6 (e.g., perfluoro-n-hexyl, perfluoro-n-pentyl, perfluoroisopentyl, perfluoro-n-butyl, perfluoroisobutyl, perfluoro-sec-butyl, perfluoro-*tert*-butyl, perfluoro-n-propyl, or perfluoroisopropyl). In some embodiments, $Rf^1$ is perfluorobutyl (e.g., perfluoro-n-butyl). In some embodiments, $Rf^1$ is perfluoropropyl (e.g., perfluoro-n-propyl).

R4 and R5 are each independently hydrogen or alkyl having from 1 to 4 carbon atoms (e.g., methyl, ethyl, n-propyl, isopropyl, n-butyl, isobutyl, or *sec*-butyl). In some embodiments, $R^4$ is selected from the group consisting of methyl and ethyl. In some embodiments, $R^5$ is selected from the group consisting of hydrogen and methyl.

p is independently an integer having a value from 2 to 11 (i.e., 2, 3, 4, 5, 6, 7, 8, 9, 10, or 11).

Fluorinated free-radically polymerizable acrylate monomers comprising perfluoroalkyl groups, and methods for their preparation, are known in the art; (see, e.g., U.S. Pat. Nos. 2,803,615 (Albrecht et al.) and 6,664,354 (Savu et al.). Methods described for making nonafluorobutanesulfonamido group-containing structures can be used to make heptafluoropropanesulfonamido groups by starting with heptafluoropropanesulfonyl fluoride, which can be made, for example, by the methods described in Examples 2 and 3 of U.S. Pat. No. 2,732,398 (Brice et al.). Methods for making other perfluoroalkyl compounds are known; (see, e.g., EP1311637 B1, published April 5, 2006). Perfluoroalkyl compounds are also available from commercial sources (e.g., 3,3,4,4,5,5,6,6,6-nonafluorohexyl acrylate from Daikin Chemical Sales, Osaka, Japan and 3,3,4,4,5,5,6,6,6-nonafluorohexyl 2-methylacrylate from Indofine Chemical Co., Hillsborough, NJ).

The composition further comprises a non-ionic surfactant. The non-ionic surfactant is an unpolymerizable surfactant, meaning that the surfactant is not reacted or copolymerized with the other components of the coating composition. Hence, the non-ionic surfactant is unpolymerized in the cured organic matrix. The non-ionic surfactant can also be characterized as "free" surfactant.

Non-ionic surfactants are organic compounds that are amphiphilic, comprising a hydrophobic group (or "tail") and a hydrophilic group (or "head"). Typically surfactant molecules migrate to the surface, where the hydrophobic group may extend out of the bulk coating phase, while the water soluble head group remains in the bulk coating phase. This alignment and aggregation of surfactant molecules at the surface acts to alter the surface properties of the coating.

A surfactant can be classified by the presence of formally charged groups in its head. The head of an ionic surfactant carries a net charge. A non-ionic surfactant has no charged groups in its head.

Surfactants can be characterized by various methodologies. One common characterization method, as known in the art, is the hydrophilic-lipophilic balance ("HLB"). Although various methods have been described for determining the HLB of a compound, unless specified otherwise, as used herein HLB refers to the value obtained by Griffin's method (See Griffin WC: "Calculation of HLB Values of Non-Ionic Surfactants," Journal of the Society of Cosmetic Chemists 5 (1954): 259).

According to Griffin's method, for fatty alcohol ethylene oxide condensation products:

$$HLB = \mathrm{E}/5$$

where E is the weight percentage of oxyethylene content. This computation provides a numerical result on a scale of 0 to 20, wherein "0" is highly lipophilic. This method can also be applied to other surfactants, such as silicone or siloxane condensation or addition products with polyethylene oxide. This method can be applied to silicone surfactants if there are no greater than 1 propylene oxide groups per molecule (i.e. as in $(Me_3SiO)_2MeSi(C_3H_6)O(CH_2CH_2O)_nCH_3$)

Some surfactants have a more complex structure where Griffin's method does not accurately predict behavior related to composition. Such cases include where on average greater than 1 repeat unit of propylene oxide or butylene oxide per molecule are present, or when nitrogen, sulfur or charged groups occur in the molecule. In these cases, and other cases where Griffin's method cannot be utilized to determine an HLB value, ccomputations can be conducted utilizing the software program Molecular Modeling Pro Plus from Norgwyn Montgomery Software, Inc. (North Wales, PA) to determine the HLB value of a particular molecule.

Computation methods are typically used to calculate the HLB of a single molecule. However, various (e.g. commercially available) non-ionic surfactants comprise a mixture of molecules. When the surfactant comprises a mixture of molecules, the HLB can be calculated by the summation of the HLBs of the individual molecules multiplied by the number fraction of each molecule. The relative concentrations of individual molecules can be determined by various analytical

techniques, such as mass spectrometry, liquid chromatography, NMR, other techniques or combinations of techniques. Unless specified otherwise, as used herein, HLB refers to the HLB based on the number average molecular weight, as determined using mass spectrometry.

The unpolymerizable non-ionic surfactant of the repellent composition has an HLB greater than 5. In some embodiments, the HLB of the surfactant is at least 5.5, 6, 6.5, 7, 7.5, 8, 8.5, or 9. When the HLB of the surfactant is too low, the dirty water beads up, but does not easily roll off the surface, resulting in spots and high haze value. In some embodiments, the HLB of the surfactant is at least 9.5, 10, 10.5, 11, 11.5, or 12. Higher HLB surfactants can provide higher roll-off angles. In some embodiments, the HLB of the non-ionic surfactant is at least 12.5, 13, 13.5, 14, 14.5, 15, 15.5, 16, 16.5, 17, 17.5, or 18. However, when the HLB is too high, such as in the case of S100, the tilt angle can increase again. Further, when the HLB is too high, the dirty water wets out the surface of the cured composition forming a thin film of dirty water. Upon evaporation of the water, a thin (e.g. continuous) layer of dirt (e.g. salt and clay) remains that causes high haze values according to the Dirty Water spray test. Thus, in typical embodiments, the HLB of the non-ionic surfactant is less than 20, 19.5, 19, 18.5, or 18. In some embodiments, the HLB of the non-ionic surfactant is less than 17.5, 17, 16.5, 16, 15.5, 15, 14.5, 14, 13.5 or 13.

The unpolymerizable (e.g. non-ionic) surfactant of the coating composition is typically not a lipolytic enzyme, such as lipase.

In some embodiments, the non-ionic surfactant is a liquid at 25°C. In other embodiments, the non-ionic surfactant is a solid at 25°C.

The non-ionic surfactant comprises an alkyl or alkenyl group having at least 12, or 14, or 16, or 18 carbon atoms. Such relatively long chain alkyl or alkylene group is commonly referred to as a "fatty" group. The number of carbon atoms can be greater than 18 carbon atoms provided the (e.g. non-ionic) surfactant is a liquid at ambient temperature (e.g. 25°C). The liquid (e.g. non-ionic) surfactant may further comprise up to 20 wt-% of a solid fraction. In some embodiments, the alkyl or alkenyl group has no greater than 24 carbon atoms. In some favored embodiments, such alkyl group is unbranched. The alkyl or alkenyl group may optionally comprise substituents, provided that the non-ionic surfactant has an HLB within a suitable range, as previously described. In some embodiments, the non-ionic surfactant is free of fluorine and silicone atoms.

Various classes of non-ionic surfactants are known including for example fatty alcohols, fatty acids, fatty amines, fatty amides, and derivatives thereof.

In some embodiments, the non-ionic surfactant is a fatty alcohol. Fatty alcohols typically have the general formula

$$R\text{-}OH$$

wherein R is a (e.g. straight or branched chain) alkyl or alkenyl group, as previously described, optionally substituted in available positions by N, O, or S atoms. Various fatty alcohols are known including dodecyl alcohol, cetyl alcohol $CH_3(CH_2)_{15}OH$, stearyl alcohol (also known as octadecyl alcohol or 1-octadecanol), and oleyl alcohol.

In some embodiments, the non-ionic surfactant is a derivative of a fatty alcohol. One favored derivative is a fatty alcohol, ester or derivative thereof comprising repeat units of ethylene oxide and/or repeat units of propylene oxide. Such derivatives may also be referred to as a polyethoxylated and/or polypropoxylated fatty alcohols, esters, or derivatives thereof. Such derivatives are a favored unpolymerizable non-ionic surfactant. Such polyethoxylated alcohol have the general formula

$$C_{18}H_{35}O(CH_2CH_2O)_nH$$

If "n" were 5, such structure has a calculated HLB of 9.0. Further, if "n" were 10, such structure has a calculated HLB of 12.4.

However, when such polyethoxylated alcohols comprise a mixture of molecules, "n" can be a weighted average of the mixture of molecules based on mass spectrophotometry.

In other embodiments, the non-ionic surfactant is a derivative of a fatty acid. Illustrative non-ionic surfactants of this type include ethoxylated fatty acids such as ethoxylated (8) stearic acid, and ethoxylated (40) stearic acid; and ethoxylated sorbitan esters such as ethoxylated (20) sorbitan monolaurate, ethoxylated (20) sorbitan monostearate, ethoxylated (20) sorbitan monooleate, and ethoxylated (4) sorbitan monooleate.

Various non-ionic surfactants are commercially available from various suppliers including Croda.

In some embodiments, the non-ionic surfactant comprises a fluorinated such as a (per)fluoroalkyl moiety or (per) fluropolyether moiety, as previously described. The fluorinated non-ionic surfactant further comprises a hydrophilic moiety, such as ethylene oxide repeat units.

In some embodiments, which are not part of the invention, the fluorinated non-ionic surfactant has the general formula:

$$C_4F_9SO_2N(R)(CH_2CH_2O)_rRa$$

wherein R and Ra are independently hydrogen or an alkyl of 1-4 carbon atoms, and r is an integer of 2 to 20. In some embodiment R and Ra are methyl and r is an integer from 4 to 10.

In another embodiment, the non-ionic surfactant comprises a silicone-containing (e.g. siloxane) moiety and a hydrophilic moiety, such as ethylene oxide repeat units. In some embodiments, which are not part of the invention, the silicone non-ionic surfactant has the general formula:

$$(RSiO)_2MeSi(Ra)O(CH_2CH_2O)_nCH_3$$

wherein R and Ra are independently hydrogen or an alkyl of 1-4 carbon atoms, and n is an integer from 2 to 40. In some embodiments, R is methyl and Ra is an alkyl of 1-4 carbon atoms (e.g. propyl).

Silicone non-ionic surfactants are commercially available from Dow Chemcial Company and Momentive.

The molecular weight of the unpolymerizable non-ionic surfactant is typically at least 250 g/mole and generally no greater than 2000 g/mole.

A single non-ionic surfactant or combination of surfactants can be utilized. The concentration of non-ionic surfactant is typically at least 5 wt.% and in some embodiments at least 10, 15 or 20 wt.% solids of the total repellent composition. The non-ionic surfactant concentration is typically no greater than 60, 55, 50, or 45 wt.% to achieve roll-off angles less than 20. In some embodiments, the non-ionic surfactant concentration is no greater than 40, 35, or 30 wt.% solids of the total repellent composition.

Without intending to be bound by theory, there appears to be some correlation between the performance and the weight ratio of low surface energy moieites (e.g. HFPO) to the total amount of ethoxylated (EO) repeat units. When the ratio was 0.95, as in the case of BRIJ 02 non-ionic surfactant, the haze according to the Dirty Water Spray Test was greater than 50%. In some embodiments, the weight ratio is less than 0.90, 0.85, 0.80, 0.75, 0.70, 0.65, 0.60, 0.55, 0.50. In some embodiments, the weight ratio of low surface energy moieites (e.g. HFPO) to the total amount of ethoxylated (EO) repeat units is at least 0.15, 0.20, 0.25. When the ratio is too low, the roll-off angles can be unfavorably high.

The preferred ratio can vary depending on the type of non-ionic surfactant. For example, surfactants with fluorinated moieties provided a haze of less than 5% and a roll-off angles of 10 or less with weight ratios of about 0.25 to 0.35. However, a silicone surfactant provided similar results with a weight ratio in the range of 0.40 to 0.50.

In some embodiments, the cured organic matrix is exclusively the reaction product of ethylenically unsaturated (e.g. free-radically polymerizable) material(s) comprising a low surface energy moiety. In other words, the cured organic matrix comprises 100 wt-% of reactions products of ethylenically unsaturated (e.g. free-radically polymerizable) material(s) comprising a low surface energy moiety.

In other embodiments, the cured organic matrix further comprises the reaction product of ethylenically unsaturated (e.g. free-radically polymerizable) material(s) that lack a low surface energy group. Thus, such materials lack fluorinated and/or silicone groups.

The amount of ethylenically unsaturated (e.g. free-radically polymerizable) material(s) that lack a low surface energy group can vary. In some embodiments, the repellent composition comprises at least 5, 10, 15, 20 or 25 wt.% of ethylenically unsaturated (e.g. free-radically polymerizable) material(s) that lack a low surface energy group. In other embodiments, the repellent composition comprises at least 30 or 35 wt.% of ethylenically unsaturated (e.g. free-radically polymerizable) material(s) that lack a low surface energy group. In some embodiments, the amount of ethylenically unsaturated (e.g. free-radically polymerizable) material(s) that lack a low surface energy group is no greater than 55 or 60 wt.%.

A variety of ethylenically unsaturated (e.g. free-radically polymerizable) material(s) can be utilized.

Di(meth)acryl ethylenically unsaturated (e.g. free-radically polymerizable) material(s) include for example 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated bisphenol A diacrylate, hydroxypivalaldehyde modified trimethylolpropane diacrylate, neopentyl glycol diacrylate, polyethylene glycol diacrylate, propoxylated neopentyl glycol diacrylate, tetraethylene glycol diacrylate, tricyclodecanedimethanol diacrylate, triethylene glycol diacrylate, tripropylene glycol diacrylate.

Tri(meth)acryl ethylenically unsaturated (e.g. free-radically polymerizable) material(s) include for example glycerol triacrylate, trimethylolpropane triacrylate, ethoxylated trimethylolpropane triacrylates (e.g. having 3 to 20 ethoxylate repeat), propoxylated glyceral triacrylates, trimethylolpropane triacrylate, tris(2-hydroxyethyl)isocyanurate triacrylate. Higher functionality (meth)acryl containing compounds include for example ditrimethylolpropane tetraacrylate, dipentaerythritol pentaacrylate, ethoxylated pentaerythritol tetraacrylate, caprolactone modified dipentaerythritol hexaacrylate.

One commercially available form of pentaerythritol triacrylate ("PET3A") is SR444 and one commercially available form of pentaerythritol tetraacrylate ("PET4A") is SR295, each available from Sartomer Company of Exton, Pennsylvania.

Oligomeric (meth)acryl materials such as urethane acrylates, polyester acrylates, epoxy acrylates; and polyacrylamide analogues of the foregoing can also be employed as the binder.

Useful, commercially available urethane (meth)acrylate compounds include EBECRYL 264 aliphatic urethane triacrylate, EBECRYL 265 aliphatic urethane triacrylate, EBECRYL 1258 aliphatic urethane triacrylate, EBECRYL 4100 aliphatic urethane triacrylate, EBECRYL 4101 aliphatic urethane triacrylate, EBECRYL 8412 aliphatic urethane acrylate (trifunctional), EBECRYL 4654 aliphatic urethane triacrylate, EBECRYL 4666 aliphatic urethane triacrylate, EBECRYL 4738 aliphatic allophanate urethane triacrylate, EBECRYL 4740 aliphatic allophanate urethane triacrylate, EBECRYL 8405 aliphatic urethane tetraacrylate, EBECRYL 8604 aliphatic urethane tetraacrylate, EBECRYL 4500 aromatic urethane tetraacrylate, EBECRYL 4501 aromatic urethane tetraacrylate, EBECRYL 4200 aliphatic urethane tetraacrylate, EBECRYL 4201 aliphatic urethane tetraacrylate, EBECRYL 8702 aliphatic urethane hexaacrylate, EBECRYL 220 aromatic urethane hexaacrylate, EBECRYL 221 aromatic urethane hexaacrylate, EBECRYL 2221 aromatic urethane hexaacrylate, EBECRYL 2221 aromatic urethane hexaacrylate, EBECRYL 5129 aliphatic urethane hexaacrylate, EBECRYL 1290 aliphatic urethane hexaacrylate, EBECRYL 1291 aliphatic urethane hexaacrylate, EBECRYL 8301-R aliphatic urethane hexaacrylate, EBECRYL 8602 aliphatic urethane acrylate (nonafunctional), all from Allnex, Brussells, Belgium; and CN929 trifunctional urethane acrylate and CN9006 aliphatic urethane acrylate (hexafunctional) from Sartomer Co., Exton, Pennsylvania.

In some embodiments, urethane (meth)acrylate compound(s) can be synthesized by reacting a polyisocyanate compound with a hydroxyl-functional (meth)acrylate compound. A variety of polyisocyanates may be utilized in preparing the urethane (meth)acrylate compound. As used herein, the term "polyisocyanate" means any organic compound that has two or more reactive isocyanate (-NCO) groups in a single molecule such as, for example, diisocyanates, triisocyanates, tetraisocyanates, and mixtures thereof. For improved weathering and diminished yellowing, the urethane (meth)acrylate compound(s) employed herein are preferably aliphatic and therefore derived from an aliphatic polyisocyanate.

In some preferred embodiments, the urethane (meth)acrylate compound is preferably a reaction product of hexamethylene diisocyanate (HDI), such as available from Covestro LLC, Pittsburgh, Pennsylvania as DESMODUR H, or a derivative thereof. These derivatives include, for example, polyisocyanates containing biuret groups, such as the biuret adduct of hexamethylene diisocyanate (HDI) available from Covestro LLC as DESMODUR N-100, polyisocyanates containing one or more isocyanurate rings

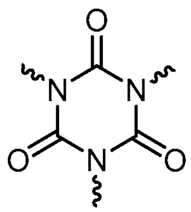

such as that available from Covestro LLC as DESMODUR N-3300, as well as polyisocyanates containing urethane groups, uretdione groups, carbodiimide groups, and/or allophanate groups. Yet another useful derivative, is a hexamethylene diisocyanate (HDI) trimer, available from Covestro LLC as DESMODURN-3800. These derivatives are preferred as they are polymeric, exhibit very low vapor pressures and are substantially free of isocyanate monomer.

The polyisocyanate is reacted with a hydroxyl-functional acrylate compound having the formula $HOQ(A)_p$; wherein Q is a divalent organic linking group, A is a (meth)acryl functional group $-XC(=O)C(R_2)=CH_2$ wherein X is O, S, or NR wherein R is H or $C_1$-$C_4$ alkyl, $R_2$ is a lower alkyl of 1 to 4 carbon atoms or H; and p is 1 to 6. The -OH group reacts with the isocyanate group forming a urethane linkage.

In some embodiments, the polyisocyanate can be reacted with a diol acrylate, such as a compound of the formula $HOQ(A)Q_1Q(A)OH$, wherein Qi is a divalent linking group and A is a (meth)acryl functional group as previously described. Representative compounds include hydantoin hexaacrylate (HHA) (e.g., see Example 1 of U. S. Pat. No. 4,262,072 (Wendling et al.), and $H_2CH=C(CH_3)C(=O)OCH_2CH(OH)CH_2O(CH_2)_4OCH_2CH(OH)CH_2OC(=O)C(CH_3)=CH_2$.

Q and Qi are independently a straight or branched chain or cycle-containing connecting group. Q can, for example, include a covalent bond, alkylene, arylene, aralkylene, or alkarylene. Q can optionally include heteroatoms such as O, N, and S, and combinations thereof. Q can also optionally include a heteroatom-containing functional group such as carbonyl or sulfonyl, and combinations thereof. In one embodiment, the hydroxyl-functional acrylate compounds used to prepare the urethane (meth)acrylate compound are monofunctional, such as in the case of hydroxyethyl acrylate, hydroxybutyl acrylate, and caprolactone monoacrylate, available as SR-495 from Sartomer Co. In this embodiment, p is 1.

In another embodiment, the hydroxyl-functional acrylate compounds used to prepare the urethane (meth) acrylate compound are multifunctional, such as the in the case of glycerol dimethacrylate, 1-(acryloxy)-3-(methacryloxy)-2-propanol, pentaerythritol triacrylate. In this embodiment, p is at least 2, at least 3, at least 4, at least 5, or at least 6.

In some embodiments, the aliphatic urethane (meth)acrylate is an oligomer that can be characterized by various physical properties. The aliphatic urethane (meth)acrylate oligomer typically has any one or combination of the following properties: an elongation less than 10 or 5% (e.g. 3%); a tensile modulus at 1% ranging from 50,000 to 100,000 psi (e.g. 88,000 psi); a tensile strength ranging from 2,000 to 5,000 psi (4350 psi); a glass transition temperature as determined by DSC ranging from 60 to 110°C (e.g. 103°C), a surface tension ranging from 30 to 45 dynes/cm (e.g. 37.4); and a viscosity at 60°C ranging from 1000 to 5000 cP (e.g. 2650). One illustrative aliphatic urethane (meth)acrylate is available from Sartomer under the trade designation "CN9010".

The non-ionic surfactant(s) are typically dispersed in the polymerizable low surface energy material and optional monomer(s), oligomer(s), and polymer(s) lacking a low surface enery moiety in combination with a (e.g. MEK) solvent, applied to a surface or substrate, such as an optical substrate and cured (e.g. photocured).

In some embodiments, the compositions described herein are free of inorganic oxide nanoparticles. In other embodiments, the compositions described herein comprises inorganic oxide nanoparticles at concentrations up to 20 wt.-%. In some embodiments, the composition comprises no greater than 15, 10, 5, 4, 3, 2, or 1 wt.% inorganic oxide nanoparticles. The inorganic oxide nanoparticles are typically non-aggregated having an average particle dimaeter of 5 to 100 nanometers. The average particle size of the inorganic oxide particles can be measured using transmission electron microscopy.

To facilitate curing, polymerizable compositions described herein may further comprise at least one free-radical thermal initiator and/or photoinitiator. Typically, such an initiator and/or photoinitiator are present in an amount less than about 10 percent by weight, more typically less than about 5 percent of the polymerizable composition, based on the total weight of the polymerizable composition. Free-radical curing techniques are well known in the art and include, for example, thermal curing methods as well as radiation curing methods such as electron beam or ultraviolet radiation. Further details concerning free radical thermal and photopolymerization techniques may be found in, for example, U.S. Patent Nos. 4,654,233 (Grant et al.); 4,855,184 (Klun et al.); and 6,224,949 (Wright et al.).

Useful free-radical thermal initiators include, for example, azo, peroxide, persulfate, and redox initiators, and combinations thereof.

Useful free-radical photoinitiators include, for example, those known as useful in the UV cure of acrylate polymers such as described in WO2006/102383.

The coating composition described herein can be used to form a (e.g. cured) surface layer, a coated article, or a coated surface such as by applying the coating composition to a surface (e.g. of a substrate or article) and curing polymerizable components of the coating composition. Once the polymerizable components present in the coating composition have been cured, a suitable solvent (such as hexane in some embodiments) can be used to extract the unpolymerizable/unpolymerized non-ionic surfactant, from the coated surface or cured coating composition.

In some embodiments, the cured coated surface layer is comprised to comprise a cured organic matrix comprising a plurality of pores. A portion of the pores are interconnected, forming a network (e.g. of tunnels). The unpolymerizable/unpolymerized non-ionic surfactant is present in the pores of the polymeric organic material.

The optical film having a surface layer of the cured coating as described herein may have a gloss or matte surface. Matte films typically have lower transmission and higher haze values than typical gloss films. Whereas gloss surfaces typically have a gloss of at least 130 as measured according to ASTM D 2457-03 at 60 °; matte surfaces have a gloss of less than 120. In some embodiments, the haze is less than 5%, or 2.5%, or 1% depending on the intended end use as measured according to ASTM D1003.

A particulate matting agent can be incorporated into the polymerizable composition in order to impart anti-glare properties to the surface layer as described in WO2008/067262. The particulate matting agent can prevent uneven coloration caused by interference with an associated hard coat layer. One commercially available silica particulate matting agent having an average particle size of 3.5 microns is commercially available from W.R. Grace and Co., Columbia, MD under the trade designation "Syloid C803".

The coating composition may optionally comprise an antistatic agent as described in WO2008/067262. Various antistatic particles are commercially available as water-based and solvent-based.

The non-ionic surfactant, polymerizable low surface energy material and optional monomer(s), oligomer(s), and polymer(s) lacking a low surface enery moiety can be dispersed in a solvent to form a dilute coating composition. The amount of solids (i.e. all the components except organic solvent) in the coating composition is typically at least 20 wt-% and usually no greater than about 75 wt-%. For some optical substrates such as polycarbonate, acrylic, cellulose acetate, and cellulose triacetate, it is preferred to employ an alcohol-based solvent including for example methanol, ethyl alcohol, isopropyl alcohol, propanol, etc. as well as glycol ethers such as propylene glycol monomethyl ether or ethylene glycol monomethyl ether, etc. For such optical substrates, the coating compositions may contain predominantly alcohol solvent(s). For other uses, however, alcohol-based solvent(s) may be combined with other (i.e. non-alcohol) solvents.

Thin coating layers can be applied to the optical substrate using a variety of techniques, including dip coating, forward and reverse roll coating, wire wound rod coating, and die coating. Die coaters include knife coaters, slot coaters, slide coaters, fluid bearing coaters, slide curtain coaters, drop die curtain coaters, and extrusion coaters among others. Many types of die coaters are described in the literature such as by Edward Cohen and Edgar Gutoff, Modem Coating and Drying Technology, VCH Publishers, NY 1992, ISBN 3-527-28246-7 and Gutoff and Cohen, Coating and Drying Defects: Troubleshooting Operating Problems, Wiley Interscience, NY ISBN 0-471-59810-0.

A die coater generally refers to an apparatus that utilizes a first die block and a second die block to form a manifold cavity and a die slot. The coating fluid, under pressure, flows through the manifold cavity and out the coating slot to form a ribbon of coating material. Coatings can be applied as a single layer or as two or more superimposed layers. Although it is usually convenient for the substrate to be in the form of a continuous web, the substrate may also be a succession of discrete sheets.

Any surface that routinely comes in contact with salty and otherwise "dirty" water could benefit from the coating composition described herein. Examples include optical displays (e.g., television screens, computer screens, cell phone screens, console displays in automobiles), optical films (e.g., screen protectors, privacy films), automobile windows, consumer appliances (e.g., stove top, outer surfaces of refrigerator), etc.

The thickness of the repellent surface layer is typically at least 0.5 microns, preferably at least 5 micron, and more preferably at least 10 microns. The thickness of the repellent surface layer is generally no greater than 25 microns. Preferably the thickness ranges from 5 microns to 20 microns.

The viewing surfaces can have any conventional size and shape and can be planar or nonplanar, although flat panel displays are preferred. The coating composition or coated film, can be employed on a variety of other articles as well such as for example camera lenses, eyeglass lenses, binocular lenses, mirrors, retroreflective sheeting, automobile windows, building windows, train windows, boat windows, aircraft windows, vehicle headlamps and taillights, display cases, road pavement markers (e.g. raised) and pavement marking tapes, overhead projectors, stereo cabinet doors, stereo covers, watch covers, as well as optical and magneto-optical recording disks, and the like.

A variety of substrates can be utilized in the articles of the invention. Suitable substrate materials include glass as well as thermosetting or thermoplastic polymers such as polycarbonate, poly(meth)acrylate (e.g., polymethyl methacrylate or "PMMA"), polyolefins (e.g., polypropylene or "PP"), polyurethane, polyesters (e.g., polyethylene terephthalate or "PET"), polyamides, polyimides, phenolic resins, cellulose diacetate, cellulose triacetate, polystyrene, styreneacrylonitrile copolymers, epoxies, and the like. Such substrates are typically non-absorbent with respect to both aqueous solutions and oils.

The substrate will typically be chosen based in part on the desired optical and mechanical properties for the intended use. Such mechanical properties typically will include flexibility, dimensional stability and impact resistance. The substrate thickness typically also will depend on the intended use. For most applications, a substrate thickness of less than about 0.5 mm is preferred, and is more preferably about 0.02 to about 0.2 mm. Self-supporting polymeric films are preferred. Films made from polyesters such as PETor polyolefins such as PP (polypropylene), PE (polyethylene) and PVC (polyvinyl chloride) are particularly preferred. The polymeric material can be formed into a film using conventional filmmaking techniques such as by extrusion and optional uniaxial or biaxial orientation of the extruded film. The substrate can be treated to improve adhesion between the substrate and the hardcoat layer, e.g., chemical treatment, corona treatment such as air or nitrogen corona, plasma, flame, or actinic radiation. If desired, an optional tie layer or primer can be applied to the substrate and/or hardcoat layer to increase the interlayer adhesion.

Various light transmissive optical films are known including but not limited to, multilayer optical films, microstructured films such as retroreflective sheeting and brightness enhancing films, (e.g. reflective or absorbing) polarizing films, diffusive films, as well as (e.g. biaxial) retarder films and compensator films such as described in U.S. Patent No. 7,099,083.

As described is U.S. Patent No. 6,991,695, multilayer optical films provide desirable transmission and/or reflection properties at least partially by an arrangement of microlayers of differing refractive index. The microlayers have different refractive index characteristics so that some light is reflected at interfaces between adjacent microlayers. The microlayers are sufficiently thin so that light reflected at a plurality of the interfaces undergoes constructive or destructive interference in order to give the film body the desired reflective or transmissive properties. For optical films designed to reflect light at ultraviolet, visible, or near-infrared wavelengths, each microlayer generally has an optical thickness (i.e., a physical thickness multiplied by refractive index) of less than about 1 $\mu$m. However, thicker layers can also be included, such as skin layers at the outer surfaces of the film, or protective boundary layers disposed within the film that separate packets of microlayers. Multilayer optical film bodies can also comprise one or more thick adhesive layers to bond two or more sheets of multilayer optical film in a laminate.

Further details concerning multilayer optical films and related constructions can be found in U.S. Pat. No. 5,882,774 (Jonza et al.), and PCT Publications WO95/17303 (Ouderkirk et al.) and WO99/39224 (Ouderkirk et al.). Polymeric multilayer optical films and film bodies can comprise additional layers and coatings selected for their optical, mechanical, and/or chemical properties. See U.S. Pat. No. 6,368,699 (Gilbert et al.). The polymeric films and film bodies

can also comprise inorganic layers, such as metal or metal oxide coatings or layers.

Various permanent and removable grade adhesive compositions may be coated on the opposite side (i.e. to the hardcoat) of the substrate so the article can be easily mounted to a display surface. Suitable adhesive compositions include (e.g. hydrogenated) block copolymers such as those commercially available from Kraton Polymers of Westhollow, Texas under the trade designation "Kraton G-1657", as well as other (e.g. similar) thermoplastic rubbers. Other exemplary adhesives include acrylic-based, urethane-based, silicone-based, and epoxy-based adhesives. Preferred adhesives are of sufficient optical quality and light stability such that the adhesive does not yellow with time or upon weather exposure so as to degrade the viewing quality of the optical display. The adhesive can be applied using a variety of known coating techniques such as transfer coating, knife coating, spin coating, die coating and the like. Exemplary adhesives are described in U.S. Patent No. 7,351,470. Several of such adhesives are commercially available from 3M Company, St. Paul, MN under the trade designations 8141, 8142, and 8161.

## Glossary

For the following defined terms, these definitions shall be applied, unless a different definition is given in the claims or elsewhere in the specification.

"Free-radically polymerizable" refers to the ability of monomers, oligomers, polymers or the like to participate in crosslinking reactions upon exposure to a suitable source of free radicals.

"(Meth)acryl" refers to functional groups including acrylates, methacrylates, acrylamides, methacrylamides, alpha-fluoroacrylates, thioacrylates and thio-methacrylates. A preferred (meth)acryl group is acrylate.

"Monovalent perfluoropolyether moiety" refers to a perfluoropolyether chain having one end terminated by a perfluoroalkyl group.

Unless otherwise noted, "HFPO-" refers to the end group $F(CF(CF_3)CF_2O)aCF(CF_3)$- of the methyl ester $F(CF(CF_3)CF_2O)aCF(CF_3)C(O)OCH3$, wherein "a" averages 2 to 15. In some embodiments, a averages between 3 and 10 or a averages between 5 and 8. Such species generally exist as a distribution or mixture of oligomers with a range of values for a, so that the average value of a may be non-integer. In one embodiment "a" averages 6.2. This methyl ester has an average molecular weight of 1,211 g/mol, and can be prepared according to the method reported in U.S. Patent No. 3,250,808 (Moore et al.), with purification by fractional distillation.

The recitation of numerical ranges by endpoints includes all numbers subsumed within the range (e.g. the range 1 to 10 includes 1, 1.5, 3.33, and 10).

Objects and advantages of this invention are further illustrated by the following examples, but the particular materials and amounts thereof recited in these examples, as well as other conditions and details, should not be construed to unduly limit this invention.

## Examples

All parts, percentages, ratios, etc. in the examples are by weight, unless noted otherwise. Solvents and other reagents used were obtained from Sigma-Aldrich Chemical Company; Milwaukee, WI unless specified differently.

| Materials | Description |
|---|---|
| ESACURE ONE | A photoinitiator, obtained from Lamberti USA, Conshohocken, PA under trade designation "ESACURE ONE" |
| Triethylene glycol monomethyl ether | Obtained from Tokyo Chemical Industry Co., Ltd., Tokyo, Japan |
| MsCl | Methane sulfonyl chloride, obtained from Alfa Aesar, Ward Hill, MA |
| MeCN | Acetonitrile, obtained from EMD Millipore Corporation, Billerica, MA |
| $NEt_3$ | Triethylamine, obtained from EMD Millipore Corporation, Billerica, MA |
| $K_2CO_3$ | Potassium carbonate, obtained from VWR International, LLC., Radnor, PA |
| $NaHCO_3$ | Sodium Bicarbonate, obtained from Avantor Performance Materials, Center Valley, PA |
| $Na_2SO_4$ | Sodium sulfate, Obtained from Alfa Aesar, Ward Hill, MA |
| Ethyl Acetate | Obtained from VWR International, LLC., Radnor, PA |
| Heptane | Obtained from VWR International, LLC., Radnor, PA |

(continued)

| Materials | Description |
|---|---|
| MeFBSA | Synthesis of MeFBSA (N-methyl-perfluorobutane sulfonamide) described in US 6,664,354, column 19 |
| FC-1 | Synthesis of $C_4F_9SO_2N(CH_3)(CH_2CH_2O)_{7.5}CH_3$ described in US 6,664,354, column 20. The software program Molecular Modeling Pro Plus from Norgwyn Montgomery Software, Inc. (North Wales, PA) was used to calculate an HLB of 17. |
| CN 9010 | Urethane Acrylate, obtained from Sartomer, Exton, PA, under trade designation "CN 9010" |
| MEK | Methyl ethyl ketone, obtained from Avantor Performance Materials, Center Valley, PA |
| HFPO-PUA | US 8,728,623, in Column 15 as the Preparation of DES N100/0.95 PET3A/0.10 HFPO-C(O)$NHCH_2CH_2OH$ (HFPO Urethane 1)- 30% solids in MEK |
| BRIJ O2 | Brij O2 - $C_{18}H_{35}(OCH_2CH_2)_nOH$ (reported HLB 4.9), Croda Inc. Edison, NJ |
| BRIJ O5 | Brij O5 - $C_{18}H_{35}(OCH_2CH_2)_nOH$ (reported HLB 9.1), Croda Inc., Edison, NJ |
| BRIJ O10 | Brij O10 - $C_{18}H_{35}(OCH_2CH_2)_{10}OH$ (reported HLB 12.4), Croda Inc., Edison, NJ |
| BRIJ S100 | BRIJ S100 - (reported HLB 18.8), Croda Inc., Edison, NJ |
| BRIJ O20 | Brij O20 - $C_{18}H_{35}(OCH_2CH_2)_nOH$ (reported HLB 15.4), Croda Inc., Edison, NJ |
| DOWSIL™ 501W Additive | Silicone surfactant $(Me_3SiO)_2MeSi(C_3H_6)O(CH_2CH_2O)_nCH_3$, Dow Chemical Company |
| Sodium chloride | Sodium chloride from VWR, West Chester, PA |
| Clay | McNamee clay-from RTVanderbilt Co., Norwalk, CT |

**Surfactant Analysis**

Mass spectrometry was performed using a liquid chromatography-mass spectrometry (LC/MS) system on an Agilent 1260 Infinity Series liquid chromatography system (Agilent Technologies, Waldbronn, Germany) without a separation column at 40°C with a flow rate of 0.5 mL per minute. 1 microliter samples were injected and eluted with a mixture of 80% of a 6 mM ammonium formate in 98% acetonitrile/2% water solution and 20% of an aqueous 6mM ammonium formate solution. The water was Omnisolv HPLC grade from EMD Millipore, a part of Merck KGaA. The acetonitrile was HPLC Grade from EMD Millipore, a part of Merck KGaA. Ammonium formate was from Sigma Aldrich, St. Louis, MO. Detection was with an Agilent 6130 Quadrupole LC/MS detector with electrospray ionization. Mass spectrometer parameters were in atmospheric pressure ionization- electrospray (API-ES) mode: capillary voltage 4 kV, nebulizer gas pressure 50 psig (345 kPa gauge), drying gas flow rate 10 liters per 15 minute, drying gas temperature 300 °C.

A sample of BRIJ O10 surfactant was diluted to ~0.005 wt % in acetonitrile and injected into a mass spectrometer. BRIJ O10 is reported to be ethoxylated oleyl alcohol. A distribution of peaks are observable in the mass spectrum that can be correlated to various degrees of ethoxylation of th oleyl alcohol. The table below shows the mass to charge ratio of detected ions (m/z), the molar mass of the molecule (determined by subtraction of the mass of the $NH_4^+$ ion buffer (18.03) used), the degree of ethoxylation (i.e. the number of ($OCH_2CH_2$) groups present), and the relative abundance of ions detected. Peaks were summed and the Mn determined using the equation $M_n = \Sigma(N_iM_i)/\Sigma N_i$, where the $N_i$ was the relative abundance of species i, $M_i$ was the molecular weight of the species i.

Utilizing this technique, the number average molecular weight ($M_n$) of BRIJ O10 was found to be 711 g/mole. This corresponds to a formula of $C_{18}H_{35}O-(OCH_2CH_2)_{10.1}-H$, having an HLB value according to Griffin's method of 12.5. Since this value is nearly identical to the reported value of 12.4, the reported values were relied upon for the other BRIJ surfactants.

The results of analyzing a commercially available silicone surfactant are as follows:
Mass Spectrometer Results for Silicone Surfactant with formula

$$(Me_3SiO)_2MeSi(C_3H_6)O(CH_2CH_2O)_nCH_3$$

| m/z | Molar Mass | Degree of Ethoxylation | Relative Abundance |
|---|---|---|---|
| 664.4 | 646.338 | 8 | 100 |
| 620.4 | 602.312 | 7 | 96.2 |
| 708.4 | 690.364 | 9 | 83.1 |
| 576.4 | 558.286 | 6 | 64.7 |
| 752.4 | 734.39 | 10 | 61.5 |
| 796.4 | 778.416 | 11 | 41.1 |
| 532.3 | 514.26 | 5 | 33.3 |
| 840.4 | 822.442 | 12 | 25.5 |

Utilizing this technique, the number average molecular weight of the silicone surfactant was found to be 655 g/mole. This corresponds to a formula of $(Me_3SiO)_2MeSi(C_3H_6)O(CH_2CH_2O)_{8.2}CH_3$, having an HLB value according to Griffin's method of 11. Molecules without both a hydrophobic and hydrophilic end group are not counted in the HLB calculation

**Synthesis of SI:** A 2 L three necked flame dried round bottom flask was charged with triethylene glycol monomethyl ether (150 g, 910 mmol), MeCN (460 mL), and $NEt_3$ (96 g, 950 mmol) and cooled to 5°C in an ice/water bath. MsCl (110 g, 74 mL, 960 mmol) was added slowly over 30 min and the reaction was then removed from the ice bath and allowed to stir overnight at room temperature. The resulting mixture was then filtered, washed with 100 mL ethyl acetate, concentrated, diluted with 400 mL ethyl acetate, filtered a second time, washed with sat. $NaHCO_3$ soln. (2 X 100 mL), washed combined aqueous layers with 100 mL ethyl acetate. Combined organic phases and dried over $Na_2SO_4$, concentrated and placed under high vacuum for 2 h, to give 210.5 g (95% yield) of a clear light orange oil that was used without further purification. According to $^1H$ NMR (500 MHz, $CDCl_3$) analysis the product had the structure depicted below.

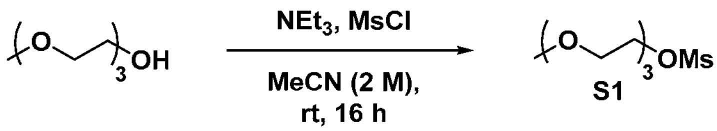


**Synthesis of FC-2:** A 1 L round bottom flask equipped with a condenser was charged with 1,1,2,2,3,3,4,4,4-nonafluoro-N-methyl-butane-1-sulfonamide (**MeFBSA,** 30.0 g, 95.8 mmol), heptane (345 mL), $K_2CO_3$ (13.5 g, 97.7 mmol), and 2-[2-(2-methoxyethoxy)ethoxy]ethyl methanesulfonate (**S1**, 22.8 g, 94.1 mmol). The reaction was heated to reflux (~98 °C) and stirred (Note: aggressive stirring required to avoid gelling) under $N_2$ for 16 h. The reaction was then cooled to room temperature, diluted with water (250 mL) and ethyl acetate (250 mL), the phases were separated and the aqueous phase was washed with ethyl acetate (250 mL). The organic phases were combined, dried over $Na_2SO_4$, filtered, and concentrated under vacuum to give a light-yellow oil that was distilled (120 °C at 58 mTorr) to yield a clear colorless oil (FC-2, 37.4 g, 85% yield). According to $^1H$ NMR (500 MHz, $CDCl_3$) analysis the product had the structure depicted below.

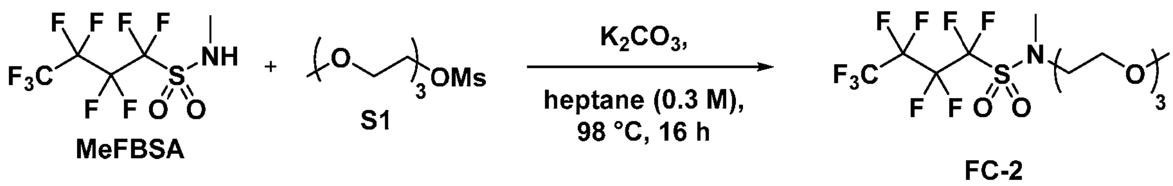


The software program Molecular Modeling Pro Plus from Norgwyn Montgomery Software, Inc. (North Wales, PA) was used to calculate an HLB of 14.7.

Roll-off Angle Test - The coated sample was affixed to a metal plate. Four 24 mg drops of deionized water were placed on the coating. The plate was slowly tilted until the drops began to move. The angle when the drops first began to move was recorded as the roll-off angle.

Contact Angle Test - Approximately 1.5" x 3" (3.8 cm x 7.6 cm) sections of the coatings described above were cut with a scissors and affixed to a glass slide with double sided tape. A Model 500 advanced contact angle goniometer (ramé-hart, Succasunna, NJ) was utilized for contact angle measurements. A 2 microliter drop of water was dispensed onto the surface with the syringe needle close enough surface to cause the drop to advance on the surface (i.e. the distance from

needle tip to the surface was less than the radius of the semicircle shaped drop), and contact angle (θ) measured 1 second and 30 seconds after the drop was dispensed. 50 microliters of water were purged through the needle between runs.

Dirty Water Spray Test - A solution of sodium chloride (0.6 grams,) clay (0.6 grams,) and water (98.8 grams) was mixed. The samples, having a surface area of 250 $cm^2$ were held vertically and sprayed using the mixed solution from 46 cm away. The trigger of the spray bottle was fully depressed 8 times delivering 4.2 grams total of the dirty water. The droplet size diameter ranged in size from about 0.5 mm to 3 mm. The larger drops tend to easily run down the repellent surface, but the smaller droplets tend to stick to the surface, leaving a dirt sport upon drying. After drying for one hour, the optical haze of each sample was measured using a Haze-Gard Plus haze meter (available from BYK Gardner, Columbia, MD) at six different points and averaged.

Example 1 (Ex1)

Example 1 (Ex1) coating solution was prepared by weighing 0.087 grams of Esacure One, 4.19 g of CN 9010, 14.1 g. of HFPO-PUA solution (30% solids in MEK), 1.5 g. of Brij O10, and 8.7 g. of MEK into a jar. This was stirred using a magnetic stirrer until the CN 9010 was dissolved (about one hour). The solution is 35% solids.

Then, to prepare the Ex1 sample, the above prepared Ex1 coating solution was coated at 35 wt% solids on 5 mil (0.13 mm) primed polyethylene terephthalate (PET) film (obtained from 3M Company, St. Paul, MN, under trade designation "SCOTCHPAK"). The coating was done using a #28 wire wound rod (available from R.D. Specialties, Webster, NY) and dried at 55 °C for 2 minutes. The coating was then cured using a Fusion H bulb (available from Fusion UV Systems, Gaithersburg, MD) at 100% power under nitrogen at 40 feet/minute (12.2 m/min). The cured coating had a thickness of about 15 micrometers.

Examples 2-16 (Ex2 - Ex16) and Comparative Examples 1-6 (C1 - C6)

Examples 2-16 (Ex2 - Ex16) and Comparative Examples 1-6 (C1-C6) were prepared in the same manner as Ex1, using the materials and amounts listed in Table 2 below. Examples 8-10 are not according to the invention, and are for reference only.

Table 2.

| sample | Esacure One g | CN9010 g | HFPO-PUA g | Surfactant Type | Surfactant Concentration g |
|---|---|---|---|---|---|
| Ex1 | 0.94 | 45.63 | 45.94 | BrijO10 | 7.49 |
| Ex2 | 0.87 | 41.94 | 42.23 | BrijO10 | 14.96 |
| Ex3 | 0.79 | 38.26 | 38.52 | BrijO10 | 22.43 |
| Ex4 | 0.75 | 36.42 | 36.67 | BrijO10 | 26.15 |
| Ex5 | 0.72 | 34.58 | 34.82 | BrijO10 | 29.88 |
| Ex6 | 0.75 | 36.42 | 36.67 | Brij O5 | 26.15 |
| Ex7 | 0.75 | 36.42 | 36.67 | Brij O20 | 26.15 |
| Ex8 | 0.75 | 36.42 | 36.67 | DC 501W | 26.15 |
| Ex9 | 0.75 | 36.42 | 36.67 | FC-1 | 26.15 |
| Ex10 | 0.75 | 36.42 | 36.67 | FC-2 | 26.15 |
| Comp Ex11 | 0.74 | 74.06 | 0 | BrijO10 | 25.2 |
| Ex12 | 0.74 | 55.54 | 18.51 | BrijO10 | 25.2 |
| Ex13 | 0.74 | 43.2 | 30.86 | BrijO10 | 25.2 |
| Ex14 | 0.74 | 18.51 | 55.54 | BrijO10 | 25.2 |
| Ex15 | 0.74 | 0 | 74.06 | BrijO10 | 25.2 |
| Ex16 | 0.74 | 30.86 | 43.2 | BrijO10 | 25.2 |
| Comp Ex17 | 0.77 | 36.42 | 36.67 | BrijO2 | 26.15 |
| Ex18 | 0.77 | 36.42 | 36.67 | Brij S100 | 26.15 |
| Ex19 | 0.64 | 30.92 | 31.13 | BrijO10 | 37.31 |

(continued)

| sample | Esacure One g | CN9010 g | HFPO-PUA g | Surfactant Type | Surfactant Concentration g |
|---|---|---|---|---|---|
| Ex20 | 0.56 | 27.26 | 27.44 | BrijO10 | 44.74 |
| Ex 21 | 0.49 | 23.6 | 23.76 | BrijO10 | 52.15 |

Table 3.

| sample | HFPO, %of solids | HFPO/ Ethoxylation Weight Ratio | Surfactant Type | Surfactant HLB | Roll-off Angle degrees | Advancing Contact Angle (θ) | Dirty Water Spray Test (% Haze) |
|---|---|---|---|---|---|---|---|
| Ex1 | 7.63 | 1.64 | BrijO10 | 12.4 | 36 | 114 | 4.3 |
| Ex2 | 7.01 | 0.76 | BrijO10 | 12.4 | 19 | 108 | 2.4 |
| Ex3 | 6.39 | 0.46 | BrijO10 | 12.4 | 14 | 99 | 2.8 |
| Ex4 | 6.09 | 0.38 | BrijO10 | 12.4 | 18 | 95 | 2.6 |
| Ex5 | 5.78 | 0.31 | BrijO10 | 12.4 | 14 | 98 | 1.8 |
| Ex6 | 6.09 | 0.51 | Brij O5 | 9.1 | 17 | 105 | 2.3 |
| Ex7 | 6.09 | 0.30 | Brij O20 | 15.4 | 20 | 95 | 2.5 |
| Ex8 | 6.09 | 0.44 | DOWSIL™ 501W Additive | 10.6 | 11 | 108 | 2 |
| Ex9 | 6.09 | 0.27 | FC-1 | | 10 | 113 | 3.4 |
| Ex10 | 6.09 | 0.32 | FC-2 | | 9 | 110 | 1.7 |
| Comp Ex11 | 0.00 | 0.00 | BrijO10 | 12.4 | 6 | 67 | 10.2 |
| Ex12 | 3.07 | 0.20 | BrijO10 | 12.4 | 14 | 100 | 2.6 |
| Ex13 | 5.12 | 0.33 | BrijO10 | 12.4 | 17 | 102 | 1.9 |
| Ex14 | 9.22 | 0.59 | BrijO10 | 12.4 | 16 | 103 | 2 |
| Ex15 | 12.29 | 0.79 | BrijO10 | 12.4 | 18 | 101 | 2.8 |
| Ex16 | 7.17 | 0.46 | BrijO10 | 12.4 | 14 | 103 | 2.1 |
| Comp Ex17 | 6.09 | 0.95 | BrijO2 | 4.9 | 31 | 111 | 57 |
| Ex18 | 6.09 | 0.25 | Brij S 100 | 18.8 | 35 | 113 | 4.8 |
| Ex29 | 5.17 | 0.22 | BrijO10 | 12.4 | 16 | 103 | 3.8 |
| Ex20 | 4.56 | 0.16 | BrijO10 | 12.4 | 19 | 92 | 2.5 |
| Ex21 | 3.94 | 0.12 | BrijO10 | 12.4 | 23 | 97 | 2.2 |

## Claims

**1.** A vehicle sensor system comprising

an exterior surface; and

a repellent surface layer disposed on the exterior surface,

wherein the repellent surface layer comprises a cured organic matrix comprising low surface energy moieties, the low surface energy moieties being fluorinated moieties, and non-ionic surfactant having a hydrophilic-lipophilic balance (HLB) greater than 5 and comprising an alkyl or alkenyl group having at least 12 carbon atoms and ethoxylated repeat units; and

wherein the exterior surface exhibits an increase in haze of less than 5, 4, 3, or 2% as determined in accordance

with the Dirty Water Spray Test as described in the Example section of the description.

2. The vehicle sensor system of claim 1 wherein the repellent surface layer exhibits an advancing water contact angle from 90° to 125°.

3. The vehicle sensor system of claim 1 wherein the repellent surface layer further comprising a support film disposed between the repellent surface layer and the exterior surface of the vehicle sensor system.

4. The vehicle sensor system of claims 1-3 wherein the polymeric film further comprises an adhesive disposed between the support film or polymeric film and the exterior surface of the vehicle sensor system.

5. The vehicle sensor system of claims 1-4 wherein the sensor system comprises a camera, a laser, a LIDAR sensor, a sonar sensor, or a radar sensor.

6. The vehicle sensor system of claims 1-5 wherein the exterior surface is a windshield surface, a protective housing, or a lens surface.

7. The vehicle sensor system of claims 1-6 wherein the low surface energy moieties comprise a monovalent perfluoropolyether moiety having the formula $F(CF(CF_3)CF_2O)aCF(CF_3)$- wherein a ranges from 4 to 15.

8. The vehicle sensor system of claims 1-7 wherein the repellent composition comprises at least 2.5, 3, 3.5, or 4.5 wt-% of low surface energy moieties.

9. The vehicle sensor system of claims 1-8 wherein the non-ionic surfactant is a liquid at ambient temperature.

10. The vehicle sensor system of claims 1-9 wherein the cured organic matrix comprises the reaction product of one or more free-radically polymerizable monomers, oligomers, polymers, or mixture thereof that lack fluorinated and/or silicone moieties.

11. The vehicle sensor system of claims 1-10 wherein the cured organic matrix comprises acrylic moieties, urethane moieties, or a combination thereof.

## Patentansprüche

1. Ein Fahrzeugsensorsystem, aufweisend

 eine Außenoberfläche; und
 eine abweisende Oberflächenschicht, die auf der Außenoberfläche angeordnet ist,
 wobei die abweisende Oberflächenschicht eine ausgehärtete organische Matrix, aufweisend Anteile mit niedriger Oberflächenenergie, wobei die Anteile mit niedriger Oberflächenenergie fluorierte Anteile sind, und ein nicht ionisches Tensid aufweist, das ein Hydrophilie-Lipophilie-Gleichgewicht (HLB) von über 5 hat und aufweisend eine Alkyl- oder Alkenylgruppe, die mindestens 12 Kohlenstoffatome und ethoxylierte Wiederholungseinheiten hat; und wobei die Außenoberfläche eine Trübungszunahme von weniger als 5, 4, 3 oder 2 % vorweist, wie gemäß dem Schmutzwassersprühtest bestimmt, wie in dem Abschnitt "Beispiele" der Beschreibung beschrieben.

2. Das Fahrzeugsensorsystem nach Anspruch 1, wobei die abweisende Oberflächenschicht einen Fortschreitwasserkontaktwinkel von 90° bis 125° vorweist.

3. Das Fahrzeugsensorsystem nach Anspruch 1, die abweisende Oberflächenschicht ferner aufweisend eine Trägerfolie, die zwischen der abweisenden Oberflächenschicht und der Außenoberfläche des Fahrzeugsensorsystems angeordnet ist.

4. Das Fahrzeugsensorsystem nach den Ansprüchen 1 bis 3, wobei die Polymerfolie ferner einen Klebstoff aufweist, der zwischen der Trägerfolie oder Polymerfolie und der Außenoberfläche des Fahrzeugsensorsystems angeordnet ist.

5. Das Fahrzeugsensorsystem nach den Ansprüchen 1 bis 4, wobei das Sensorsystem eine Kamera, einen Laser, einen

LIDAR-Sensor, einen Sonarsensor oder einen Radarsensor aufweist.

6. Das Fahrzeugsensorsystem nach den Ansprüchen 1 bis 5, wobei die Außenoberfläche eine Windschutzscheibenoberfläche, ein Schutzgehäuse oder eine Linsenoberfläche ist.

7. Das Fahrzeugsensorsystem nach den Ansprüchen 1 bis 6, wobei die Anteile mit niedriger Oberflächenenergie einen einwertigen Perfluorpolyetheranteil aufweisen, der die Formel $F(CF(CF_3)CF_2O)aCF(CF_3)$- hat, wobei a von 4 bis 15 reicht.

8. Das Fahrzeugsensorsystem nach den Ansprüchen 1 bis 7, wobei die abweisende Zusammensetzung mindestens zu 2,5, 3, 3,5 oder 4,5 Gew.-% Anteile mit geringer Oberflächenenergie aufweist.

9. Das Fahrzeugsensorsystem nach den Ansprüchen 1 bis 8, wobei das nicht ionische Tensid bei Umgebungstemperatur eine Flüssigkeit ist.

10. Das Fahrzeugsensorsystem nach den Ansprüchen 1 bis 9, wobei die ausgehärtete organische Matrix das Reaktionsprodukt eines oder mehrerer radikalisch polymerisierbarer Monomere, Oligomere, Polymere oder Mischungen davon aufweist, denen fluorierte und/oder Silikonanteile fehlen.

11. Das Fahrzeugsensorsystem nach den Ansprüchen 1 bis 10, wobei die ausgehärtete organische Matrix Acrylanteile, Urethananteile oder eine Kombination davon aufweist.

**Revendications**

1. Système de capteurs de véhicules comprenant

   une surface extérieure ; et
   une couche de surface répulsive disposée sur la surface extérieure,
   dans lequel la couche de surface répulsive comprend une matrice organique durcie comprenant des fractions à faible énergie de surface, les fractions à faible énergie de surface étant des fractions fluorées, et un agent tensioactif non ionique ayant un équilibre hydrophile-lipophile (HLB) supérieur à 5 et comprenant un groupe alkyle ou alcényle ayant au moins 12 atomes de carbone et des unités répétées éthoxylées ; et dans lequel la surface extérieure présente une augmentation du trouble inférieure à 5, 4, 3 ou 2 %, comme déterminée conformément au test de pulvérisation d'eau sale comme décrit dans la section Exemple de la description.

2. Système de capteurs de véhicule selon la revendication 1, dans lequel la couche de surface répulsive présente un angle de contact avec l'eau compris entre 90 ° et 125 °.

3. Système de capteurs de véhicule selon la revendication 1, dans lequel la couche de surface répulsive comprend en outre un film de support disposé entre la couche de surface répulsive et la surface extérieure du système de capteurs de véhicule.

4. Système de capteurs de véhicule selon les revendications 1 à 3, dans lequel le film polymère comprend en outre un adhésif disposé entre le film de support ou le film polymère et la surface extérieure du système de capteurs de véhicule.

5. Système de capteurs de véhicule selon les revendications 1 à 4, dans lequel le système de capteurs comprend une caméra, un laser, un capteur LIDAR, un capteur sonar ou un capteur radar.

6. Système de capteurs de véhicule selon les revendications 1 à 5, dans lequel la surface extérieure est une surface de pare-brise, un boîtier de protection ou une surface de lentille.

7. Système de capteurs de véhicule selon les revendications 1 à 6, dans lequel les fractions à faible énergie de surface comprennent une fraction perfluoropolyéther monovalente ayant la formule $F(CF(CF_3)CF_2O)aCF(CF_3)$-, dans lequel a est dans une plage comprise entre 4 et 15.

8. Système de capteur de véhicule selon les revendications 1 à 7, dans lequel la composition répulsive comprend au

moins 2,5, 3, 3,5 ou 4,5 % en poids de fractions à faible énergie de surface.

**9.** Système de capteurs de véhicule selon les revendications 1 à 8, dans lequel l'agent tensioactif non ionique est un liquide à température ambiante.

**10.** Système de capteurs de véhicule selon les revendications 1 à 9, dans lequel la matrice organique durcie comprend le produit de réaction d'un ou plusieurs monomères, oligomères, polymères polymérisables par voie radicalaire ou mélange de ceux-ci qui sont dépourvus de fractions fluorées et/ou de silicone.

**11.** Système de capteurs de véhicule selon les revendications 1 à 10, dans lequel la matrice organique durcie comprend des fractions acryliques, des fractions uréthanes ou une combinaison de celles-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20160057607 A
- US 8742022 B
- WO 2013191822 A
- WO 2013191861 A
- US 7718264 B
- US 7342080 B
- US 2005249940 A
- US 2803615 A, Albrecht
- US 6664354 B, Savu
- US 2732398 A, Brice
- EP 1311637 B1
- US 4262072 A, Wendling
- US 4654233 A, Grant
- US 4855184 A, Klun
- US 6224949 B, Wright
- WO 2006102383 A
- WO 2008067262 A
- US 7099083 B
- US 6991695 B
- US 5882774 A, Jonza
- WO 9517303 A, Ouderkirk
- WO 9939224 A, Ouderkirk
- US 6368699 B, Gilbert
- US 7351470 B
- US 3250808 A, Moore
- US 8728623 B


### Non-patent literature cited in the description


- **GRIFFIN WC**. Calculation of HLB Values of Non-Ionic Surfactants. *Journal of the Society of Cosmetic Chemists*, 1954, vol. 5, 259
- **EDWARD COHEN** ; **EDGAR GUTOFF**. Modem Coating and Drying Technology. VCH Publishers, 1992
- **GUTOFF** ; **COHEN**. Coating and Drying Defects: Troubleshooting Operating Problems. Wiley Interscience